Europäisches Patentamt

**European Patent Office**

Office européen des brevets

(11) Veröffentlichungsnummer: **0 099 555**
**B1**

(12) **EUROPÄISCHE PATENTSCHRIFT**

(45) Veröffentlichungstag der Patentschrift:
20.12.89

(51) Int. Cl.⁴: **A 47 L 17/02,** C 02 F 1/68

(21) Anmeldenummer: 83106941.4

(22) Anmeldetag: 15.07.83

(54) Dosiergerät und Verfahren zum Betrieb des Geräts.

(30) Priorität: 23.07.82 DE 3227495

(43) Veröffentlichungstag der Anmeldung:
01.02.84 Patentblatt 84/5

(45) Bekanntmachung des Hinweises auf die Patenterteilung:
20.12.89 Patentblatt 89/51

(84) Benannte Vertragsstaaten:
AT BE CH DE FR GB IT LI NL SE

(56) Entgegenhaltungen:
DE-A- 1 900 383

(73) Patentinhaber: Henkel Kommanditgesellschaft auf Aktien, Postfach 1100 Henkelstrasse 67,
D-4000 Düsseldorf-Holthausen (DE)

(72) Erfinder: vom Hofe, Dieter, Uedesheimer Weg 2,
D-5000 Köln 71 (DE)
Erfinder: Morr, Klaus, Habernusstrasse 50,
D-4040 Neuss 22 (DE)
Erfinder: Guirr, Ortburg, Eichhornstrasse 68,
D-4150 Krefeld 1 (DE)
Erfinder: Peist, Rolf, Bonner Strasse 14,
D-4000 Düsseldorf 13 (DE)

## Beschreibung

Die Erfindung betrifft ein Dosiergerät mit einem Behälter mit Austrittsöffnungen zum kontinuierlichen und gleichmäßigen Eindosieren von ein höheres spezifisches Gewicht als Wasser aufweisenden Zusatzmitteln, insbesondere Spülmitteln in Spülwasser eines einen ständigen Wasserzu- und -ablauf aufweisenden Schanktischbeckens, wobei der Behälter, vorzugsweise mit Hilfe eines Saugers, an einer Behälterseitenwand zu befestigen und um eine horizontale Schwenkachse drehbar an die Beckenseitenwand anzusetzen ist. Sie betrifft ferner ein Verfahren zum Betrieb des Geräts.

In der DE-B 11 45 320 wird eine Vorrichtung zum Beimischen von Zusätzen, nämlich hoch viskosen konzentrierten Lösungen, zu Spülwasser beschrieben. Bei stoßweisem Benutzen des Spülbeckens wird der Wasserzulauf häufig der Intensität der Benutzung angepaßt. Da die bekannte Vorrichtung das Zusatzmittel, z.B. beim Gläserspülen, unabhängig von der Benutzungsintensität sowie der Stärke des Wasserzulaufs eindosiert und das Dosieren bei stillstehendem Wasser nur durch Herausdrehen der Austrittsöffnungen des Dosierbehälters aus dem Wasser unterbunden werden kann, ist die Konzentration des Zusatzmittels im Spülwasser bei schwacher Benutzung oft zu stark und bei starker Benutzung oft zu schwach.

Der Erfindung liegt die Aufgabe zugrunde, ein möglichst einfach ausgebildetes bzw. herzustellendes sowie zu handhabendes und dabei exakt regulierendes Dosiergerät zu schaffen, mit dem es möglich ist, mit nur einer Produkteinstellung bestimmter Viskosität und Dichte, bei unterschiedlichen Spülbedingungen gleichmäßige Spülergebnisse zu erzielen. Diese Forderungen sollen sowohl für unterschiedliche Spülwassertemperaturen als auch für wechselnde Wasserzu- und -ablaufmengen sowie unabhängig vom Verschmutzungsgrad des Spülguts oder der Spülmenge pro Zeiteinheit zu erfüllen sein.

Die erfindungsgemäße Lösung besteht für das Dosiergerät eingangs genannter Art darin vgl. DE-B 11 45 320, daß der Behälter auf einer ersten seiner etwa parallel zu der Schwenkachse verlaufenden Umfangs- bzw. Stirnwände eine Einfüll- und Belüftungsöffnung besitzt und zusätzlich mindestens eine Überlauföffnung aufweist, daß der radiale Abstand zwischen der Schwenkachse und jeweils mindestens einem Punkt von zwei relativ zueinander geneigten Stirnwänden etwa gleich ist, daß der Behälter im bezüglich der Schwenkachse der Einfüll- und Belüftungsöffnung etwa diametral gegenüberliegenden Bereich wenigstens eine Austrittsöffnung besitzt und daß die Einfüll- und Belüftungsöffnung im Behälterinnern mit Hilfe einer Trennwand bis auf einen an eine der ersten Stirnwand benachbarte und der Austrittsöffnung gegenüberliegende zweite Stirnwand angrenzenden Durchlaßspalt gegenüber dem übrigen, beim Schwenken in die Dosierstellung eine Produktwanne bildenden Innenraum abgeschirmt ist.

Vorzugsweise werden zwei oder mehr einzeln zu verschließende Austrittsöffnungen in einer im wesentlichen senkrecht zu der Schwenkachse stehenden Seitenwand des Behälters vorgesehen. Unter «Seitenwand» werden die etwa senkrecht zu der Schwenkachse und damit auch zu den Stirnwänden verlaufenden Flächen des Behälters also insbesondere der Boden des Unterteils und der Deckel verstanden. Die vorgenannten ersten und zweiten Stirnflächen spannen vorzugsweise die Schenkel bzw. Katheten eines gleichschenkligen und/oder rechtwinkligen Dreiecks auf, dessen Hypotenuse die restliche Randwand des beispielsweise dosenartigen, flachen Unterteils bildet.

Das erfindungsgemäße Dosiergerät soll so im Spülbecken angebracht werden, daß sich die Produktaustrittsöffnung während des Betriebs ständig unter der Wasseroberfläche befindet. Wegen des relativ hohen spezifischen Gewichts des einzudosierenden Spülmittels ist dann bis zur völligen Restentleerung des Behälters eine kontinuierliche und gleichmäßige Dosierung zu gewährleisten. Da ferner die Einfüll- und Belüftungsöffnung der Austrittsöffnung gegenüberliegen soll und daher auch bei starker Wasserbewegung wenigstens zum Teil immer oberhalb des Wasserspiegels liegt, kann sich im Behälterinnern ein Unterdruck nicht ausbilden. Verbesserungen und weitere Ausgestaltungen der Erfindung werden in den Unteransprüchen beschrieben.

Anhand der schematischen Darstellung eines Ausführungsbeispiels werden Einzelheiten der Erfindung erläutert. Es zeigen:

Fig. 1 das Dosiergerät, teilweise im Schnitt, in der Ansicht von vorn in der Stellung «Dosieren»; und

Fig. 2 das Gerät nach Fig. 1, teilweise im Schnitt, in der Draufsicht in der Stellung «Füllen».

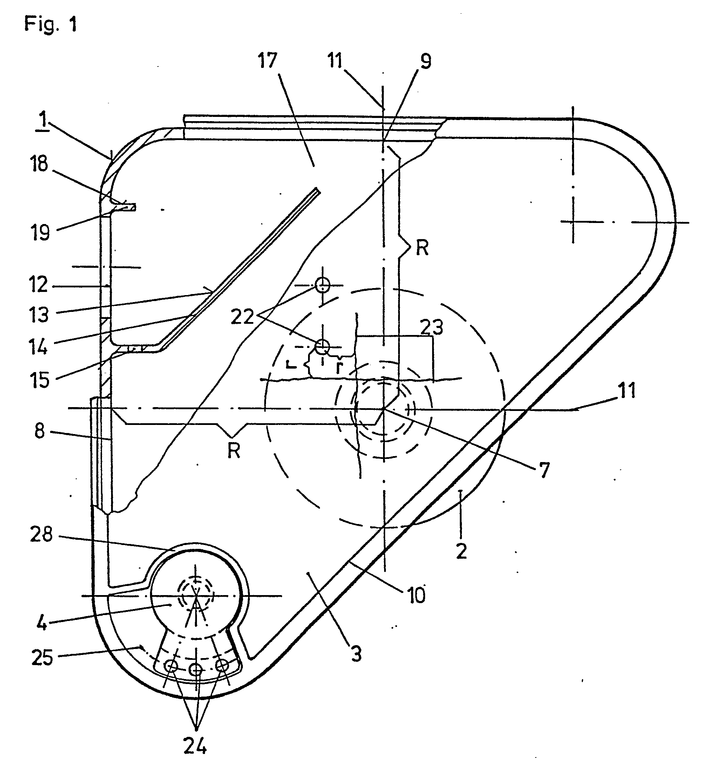

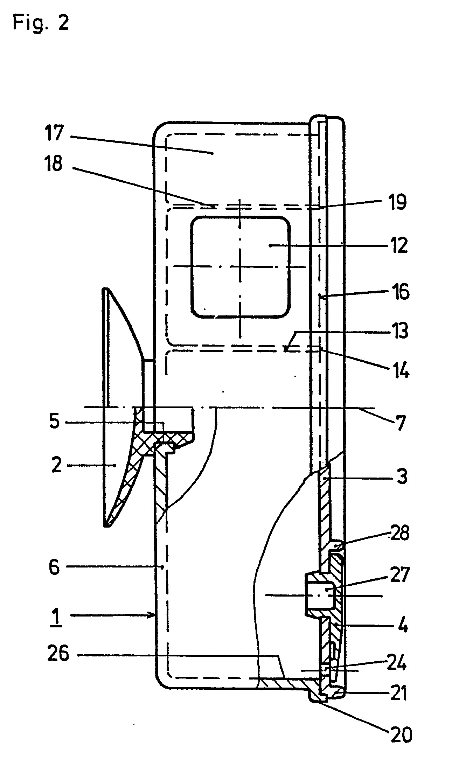

Zum Herstellen des Dosiergeräts nach Fig. 1 und 2 werden als Einzelteile lediglich das insgesamt mit 1 bezeichnete dosenartige Unterteil, der Saugstopfen 2, der Deckel 3 und das Reguliersegment 4 benötigt. Der Saugstopfen 2 wird in eine Bohrung 5 in der Rückwand 6 des Unterteils 1 dichtend und drehbar eingeschnappt. Die Mittellinie der Bohrung 5 liegt in der Schwenkachse 7, um die sich das an der Spülbeckenwand zu montierende Gerät drehen soll. Der radiale Abstand zwischen der Schwenkachse 7 und den beiden etwa parallel zur Schwenkachse verlaufenden Umfangs- bzw. Stirnwänden 8 und 9, die im Ausführungsbeispiel die Schenkel eines gleichschenklig rechtwinkligen Dreiecks mit der Hypotenuse 10 aufspannen, soll aus weiter unten zu erläuternden Gründen im wesentlichen gleich sein. Das Gerät wird vorzugsweise so an der Spülbeckenwand befestigt, daß die Schwenkachse 7 in etwa auf dem gleichen Niveau wie der Wasserspiegel 11 im Spülbecken liegt.

Das Unterteil 1 besitzt in der ersten Stirnwand 8 eine Einfüll- und Belüftungsöffnung 12. Zum Füllen wird die die Öffnung 12 enthaltende Stirnwand 8 durch Schwenken um die Achse 7 in die Horizontale gebracht. Eine abgewinkelte oder auch anders ausgebildete, an das Unterteil 1 angeformte Trennwand 13 liegt mit ihrer Stirnfläche 14 dichtend an der Innenfläche 16 des Deckels 3 an und schirmt die Öffnung 12 gegenüber dem Behälterinnern bis auf einen Durchlaßspalt 17 ab. Der Spalt 17 soll vorzugsweise in etwa denselben Querschnitt wie die Öffnung 12 besitzen. Auf der der Trennwand 13 gegenüberliegenden Seite der Öffnung 12 sitzt am Unterteil 1 eine Tropfleiste 18, diese soll mit ihrer Stirnfläche 19 ebenfalls dichtend an der Innenfläche 16 des Deckels 3 anliegen.

Das Unterteil 1 und der Deckel 3 sollen fest, z.B. stoffschlüssig durch Kleben oder Schweißen, verbunden werden. Für den Fall des Schweißens mit Ultraschall soll der abgewinkelte, umlaufende Rand 20 der Wände 8, 9 und 10 des Unterteils 1 zusammen mit der umlaufenden Randgestaltung 21 des Deckels 3 der üblichen Zuordnung von Amboß und Sonotrode entsprechen.

Der Deckel 3 besitzt im Ausführungsbeispiel eine oder mehrere Wasser-Überlaufbohrungen 22, die in Gerätestellung «Füllen» (Fig. 1), d.h. bei horizontal liegender, die Füllöffnung 12 enthaltender Stirnwand 8, auf einer hierzu parallelen, ebenfalls waagerechten Linie nebeneinander angeordnet sind. In der Gerätestellung «Dosieren», in der die Füllöffnung 12 enthaltende erste Stirnwand 8 in die Vertikale geschwenkt wird, hat die unterste Überlaufbohrung 22 denselben Abstand r zu dem vorzugsweise durch Markierungsstriche für das Behälterinnere vorgegebenen Füllspiegel 23 wie alle Bohrungen 22 in der Stellung «Füllen» gemäß Fig. 2. In einer Abwandlung können die Bohrungen 22 auch in der Rückwand 6 des Unterteils 1 vorgesehen werden.

Im Ausführungsbeispiel besitzt der Deckel 3 in der dem Durchlaßspalt 17 gegenüberliegenden Ecke des gleichschenkligen Dreiecks mehrere Produktaustrittsbohrungen 24, deren Durchmesser auf die Produktviskosität abgestimmt sind und die auf einem Kreisbogen 25 um die Drehachse des Reguliersegments 4 möglichst nahe der unteren Innenecke bzw. Innenkante 26 des Unterteils 1 liegen. Das Reguliersegment 4 wird vorzugsweise in eine seiner Drehachse entsprechende Bohrung 27 im Deckel 3 (bzw. in der Rückwand 6) dichtend und drehbar eingeprellt. Vorzugsweise begrenzt eine Profilrippe 28 den Einstellungsbereich des Reguliersegments 4 und schützt dieses vor ungewollter Verstellung.

Funktionsweise des Dosiergerätes:

Das Dosiergerät wird mit dem Saugstopfen 2 so an der jeweiligen Spülbeckenwand befestigt, daß der Stopfen etwa zur Hälfte in das Wasser des gefüllten Spülbeckens eintaucht. Das Gerät wird dann zunächst auf Stellung «Füllen» gemäß Fig. 2 mit nach oben offener Einfüll- und Belüftungsöffnung 12 geschwenkt. Der Behälter wird dann mit dem Produkt, das ein spezifisches Gewicht von mehrt als 1 haben soll, bis zum markierten Füllspiegel 23 befüllt. Dabei wird das einfließende Produkt durch die Trennwand 13 seitlich umgelenkt und fließt an der senkrecht stehenden, zweiten Stirnwand 9 (Fig. 2) nach unten. Im Behälterinnern befindliches Wasser wird durch das relativ schwerere Produkt nach oben verdrängt und kann durch die oberhalb des Spülwasserspiegels 11 liegenden Wasserüberlaufbohrungen 22 abfließen.

Nun wird mit Hilfe des Reguliersegments 4 die gewünschte Dosiereinstellung vorgenommen. Daraufhin wird das Dosiergerät durch eine 90°-Drehung mit den Produktaustrittsbohrungen 24 nach unten in die Gerätestellung «Dosieren» gemäß Fig. 1 um die Schwenkachse 7 gedreht. Die Austrittsbohrungen 24 befinden sich dann etwa am untersten Punkt des Behälters und sowohl die Überlauföffnungen 22 als auch die Einfüllöffnungen 12 befinden sich oberhalb des Spülwasserspiegels 11.

Beim Schwenken des Behälters aus der Stellung «Füllen» nach Fig. 2 in die Stellung «Dosieren» nach Fig. 1 fließt die eingefüllte Produktmenge von der einen wannenartigen Ecke des gleichschenkligen Dreiecks in die andere, ohne daß Produkt durch die Wasserüberlaufbohrungen 22 und die Einfüll- und Belüftungsöffnung 12 ungewollt austreten könnte. Auch eventuelle Produktreste, die sich an den Wandungen im Bereich der Einfüll- und Belüftungsöffnung 12 befinden, können wegen der Tropfleiste 18 nicht ausfließen sondern sammeln sich unterhalb der Öffnung 12 in einer aus den Behälterwänden und der Trennwand gebildeten, ausreichend großen dimensionierten Auffangwanne. Diese kann auch eine kleine Öffnung 15 zwischen Stirnfläche 14 der Trennwand 13 und Innenfläche 16 des Deckels 3 besitzen. Durch die Öffnung 15 können Produktreste allmählich nach innen zum übrigen Produkt abfließen.

Die Produktaustrittsbohrungen 24 befinden sich während des Betriebs ständig unter dem Wasserspiegel 11 im Spülbecken. Weil das Produkt ein größeres spezifisches Gewicht als Wasser besitzt, und durch die Öffnung 12, deren Oberkante auch bei starker Wasserbewegung immer oberhalb des Wasserspiegels 11 liegen soll, Luft in das Behälterinnere eindringen kann, wird bis zur völligen Restentleerung des Behälters eine kotinuierliche und gleichmäßige Produktdosierung gewährleistet. Bei der Verwendung transparenter Kunststoffe zum Herstellen von Unterteil 1 und Deckel 3 des Gerätes ist für den Anwender leicht zu erkennen, wann das Dosiergerät nachzufüllen ist.

Bezugszeichenliste
    1 = Unterteil, Behälter
    2 = Saugstopfen
    3 = Deckel
    4 = Reguliersegment
    5 = Bohrung
    6 = Rückwand
    7 = Schwenkachse
    8 = erste Stirnwand
    9 = zweite Stirnwand
    10 = Hypotenuse
    11 = Spülwasserspiegel
    12 = Einfüll- und Belüftungsöffnung
    13 = Trennwand

14 = Stirnfläche
15 = kleine Öffnung
16 = Innenfläche
17 = Durchlaßspalt
18 = Tropfleiste
19 = Stirnfläche (18)
20 = Rand (1)
21 = Rand (3)
22 = Überlauföffnungen
23 = Füllspiegel
24 = Produktaustrittsöffnungen
25 = Kreisbogen
26 = Innenkante
27 = Bohrung
28 = Profilrippe
R = radialer Abstand 7/8, 9
r = Abstand 22/11

**Patentansprüche**

1. Dosiergerät mit einem Behälter (1) mit Austrittsöffnungen (21) zum kontinuierlichen, gleichmäßigen Eindosieren von ein höheres spezifisches Gewicht als Wasser aufweisenden Zusatzmitteln, insbesondere Spülmitteln in Spülwasser eines einen ständigen Wasserzu- und -ablauf aufweisenden Schanktischbeckens, wobei der Behälter (1), vorzugsweise mit Hilfe eines Saugers (2), an einer Beckenseitenwand zu befestigen und um eine horizontale Schwenkachse (7) drehbar an die Beckenseitenwand anzusetzen ist, dadurch gekennzeichnet, daß der Behälter (1) auf einer ersten seiner etwa parallel zu der Schwenkachse (7) verlaufenden Umfangs- bzw. Stirnwände (8) eine Einfüll- und Belüftungsöffnung (12) besitzt und zusätzlich mindestens eine Überlauföffnung (22) aufweist, daß der radiale Abstand (R) zwischen der Schwenkachse (7) und jeweils mindestens einem Punkt von zwei relativ zueinander geneigten Stirnwänden (8, 9) etwa gleich ist, daß der Behälter im bezüglich der Schwenkachse (7) der Einfüll- und Belüftungsöffnung (12) etwa diametral gegenüberliegenden Bereich wenigstens eine Austrittsöffnung (24) besitzt und daß die Einfüll- und Belüftungsöffnung (12) im Behälterinnern mit Hilfe einer Trennwand (13) bis auf einen an eine der ersten Stirnwand (8) benachbarte und der Austrittsöffnung (24) gegenüberliegende zweite Stirnwand (9) angrenzenden Durchlaßspalt (17) gegenüber dem übrigen, beim Schwenken in die Dosierstellung eine Produktwanne bildenden Innenraum abgeschirmt ist.

2. Dosiergerät nach Anspruch 1, dadurch gekennzeichnet, daß sich die Überlauföffnung (22) in einer im wesentlichen senkrecht zur Schwenkachse (7) stehenden Seitenwand (3, 6) befindet.

3. Dosiergerät nach Anspruch 1 oder 2, dadurch gekennzeichnet, daß zwei oder mehr einzeln zu verschließende Austrittsöffnungen (24), insbesondere in einer Seitenwand (3, 6) vorgesehen sind.

4. Dosiergerät nach einem oder mehreren der Ansprüche 1 bis 3, dadurch gekennzeichnet, daß der Behälter (1) bis auf die Einfüll- und Belüftungsöffnung (12), die Überlauföffnung (22) sowie die Austrittsöffnungen (24) stoffschlüssig, insbesondere durch Kleben oder Schweißen, abgedichtet ist.

5. Dosiergerät nach einem oder mehreren der Ansprüche 1 bis 4, dadurch gekennzeichnet, daß der Behälter (1) aus transparentem Kunststoff besteht.

6. Dosiergerät nach einem oder mehreren der Ansprüche 1 bis 5, dadurch gekennzeichnet, daß die Stirnwände (8, 9) die Schenkel bzw. Katheten eines gleichschenkligen und/oder rechtwinkligen Dreiecks aufspannen.

7. Dosiergerät nach einem oder mehreren der Ansprüche 1 bis 6, dadurch gekennzeichnet, daß die Schwenkachse (7) im gleichen radialen Abstand (R) von zwei auf den Schenkeln eines gleichseitigen Dreiecks angeordneten Stirnwänden (8, 9) liegt.

8. Dosiergerät nach einem oder mehreren der Ansprüche 1 bis 7, dadurch gekennzeichnet, daß der Füllspiegel (23) des Behälters (1) sowohl in der Füllstellung als auch in der Dosierstellung um einen bestimmten, in etwa gleichen Betrag (r) unterhalb der Überlauföffnung (22) liegt.

9. Dosiergerät nach einem oder mehreren der Ansprüche 1 bis 10, dadurch gekennzeichnet, daß die Austrittsöffnungen (24) auf einem Kreisbogen (25) um die Achse des Schwenksegments (4) angeordnet sind.

10. Dosiergerät nach einem oder mehreren der Ansprüche 1 bis 9, dadurch gekennzeichnet, daß bei zum Befestigen des Behälters (1) an der Beckenseitenwand verwendetem Saugstopfen (2) dieser dichtend drehbar in eine Bohrung (5) einer Behälterseitenwand (3, 6) eingesetzt, insbesondere eingeschnappt, ist und daß die Drehachse des Stopfens zugleich die Schwenkachse (7) des Behälters ist.

11. Dosiergerät nach einem oder mehreren der Ansprüche 1 bis 10, dadurch gekennzeichnet, daß die Schwenkachse (7) des Behälters (1) bei Betrieb in etwa auf dem Niveau des Spülwasserspiegels (11) liegt.

12. Verfahren zum Betrieb des Dosiergeräts nach einem oder mehreren der Ansprüche 1 bis 11, dadurch gekennzeichnet, daß die die Einfüll- und Belüftungsöffnung (12) aufweisende Stirnwand (8) beim Füllen in die Horizontale und beim Dosieren in die Vertikale geschwenkt wird.

**Claims**

1. Metering device with a container (1) with exit openings (21) for the continuous uniform metering of additives displaying a higher specific weight than water, in particular rinsing agents, into the rinsing water of a bar basin displaying a constant inflow and outflow of water, wherein the container (1) is to be fastened at a basin side wall, preferably with the aid of a suction cup (2), and to be placed against the basin side wall to be rotatable about an horizontal pivot axis (7), characterised thereby, that the container (1) possesses a filling and ventilation opening (12) on a first one of its circumferential or end walls (8) extending about parallelly to the pivot axis (7) and additionally displays at least one overflow opening (22), that the radial spacing (R) between the pivot axis (7) and at least one respective point of two mutually inclined end walls (8, 9) is about equal, that the container possesses at leat one exit opening (24) in the region lying about diametrally opposite the filling and ventilation opening (12) with respect to the pivot axis (7) and that filling and ventilation opening (12) is screened in the interior of the container with the aid of a partition (13) – apart from a passage gap (17), which is adjacent the first end wall (8) and adjoins the second end wall (9) lying opposite the exit opening (24) – from the remaining interior space which on pivotation into the metering position forms a product trough.

2. Metering device according to claim 1, characterised thereby, that the overflow opening (22) is situated in a side wall (3, 6) standing substantially perpendicular to the pivot axis (7).

3. Metering device according to claim 1 or 2, characterised thereby, that two or more individually closable exit openings (24) are provided, in particular in a side wall (3, 6).

4. Metering device according to one or more of the claims 1 to 3, characterised thereby, that the container (1) is sealed, apart from the filling and ventilation opening (12) and the overflow opening (22) as well as the exit openings (24), in substance-bonded manner, in particular by gluing or welding.

5. Metering device according to one or more of the claims 1 to 4, characterised thereby, that the container (1) consists of transparent synthetic material.

6. Metering device according to one or more of the claims 1 to 5, characterised thereby, that the end walls (8, 9) span the limbs or cathetusses of an isosceles and/or right-angled triangle.

7. Metering device according to one or more of the claims 1 to 6, characterised thereby, that the pivot axis (7) lies at the same radial spacing (R) from two end walls (8, 9) arranged on the limbs of an equilateral triangle.

8. Metering device according to one or more of the claims 1 to 7, characterised thereby, that the filling level (23) of the container (1) lies below the overflow opening (22) by a certain amount (r) about equal in the filling position as well as also in the metering position.

9. Metering device according to one or more of the claims 1 to 8, characterised thereby, that the exit openings (24) are arranged on a circular arc (25) about the taxis of the pivot segment (4).

10. Metering device according to one or more of the claims 1 to 9, characterised thereby, that in the case of a suction plug (2) being used for the fastening of the container (1) at the basin side wall, this suction plug (2) is sealingly inserted, in particular snapped in, to be rotatable in a bore (5) of a container side wall (3, 6), and that the rotational axis of the plug is the pivot axis (7) of the container at the same time.

11. Metering device according to one or more of the claims 1 to 10, characterised thereby, that the pivot axis (7) of the container (1) in operation lies at about the height of the rinsing water level (11).

12. Method for the operation of the metering device according to one or more of the claims 1 to 11, characterised thereby, that the end wall (8) displaying the filling and ventilation opening (12) is pivoted into the horizontal position during filling and into the vertical position during metering.

## Revendications

1. Appareil doseur constitué d'un récipient (1) pourvu d'orifices de sortie (24) pour un dosage continu et homogène d'additifs ayant un poids spécifique plus élevé que l'eau tels que, notamment, des liquides de lavage dans l'eau de lavage d'un bac de comptoir ayant une arrivée et un écoulement permanent d'eau et dans lequel le récipient (1) doit être, de préférence, fixé sur l'une de ses parois à l'aide d'une ventouse (2) et de façon mobile autour d'un axe horizontal de pivotement (7), cet appareil étant caractérisé par le fait que le récipient (1) est pourvu d'une ouverture de remplissage et d'aération (12) sur sa première paroi frontale (8) se situant à peu près parallèlement à l'axe de pivotement (7) et, en plus, d'au moins un orifice de trop-plein (22); que la distance radiale (R) entre l'axe de pivotement (7) et respectivement au moins un point des deux parois frontales (8, 9) relativement inclinées l'une vers l'autre est à peu près égale; que le récipient comporte au moins un orifice de sortie (24) dans la zone à peu près diamétralement opposée à l'axe de pivotement (7) de l'ouverture de remplissage et d'aération (12) et que cette ouverture de remplissage et d'aération (12) est protégée, lors du pivotement en position de dosage, depuis l'intérieur du récipient et par rapport au reste de l'intérieur de celui-ci, qui constitue la cuve à produit, à l'aide d'une paroi de séparation (13) à l'exception d'une ouverture de passage (17) contiguë à la deuxième paroi frontale (9) se situant en face de l'orifice de sortie (24) adjacent à la première paroi frontale (8).

2. Appareil doseur selon la revendication 1, caractérisé par le fait que l'orifice de trop-plein (22) se trouve dans une paroi latérale (3, 6) se situant pour l'essentiel perpendiculairement à l'axe de pivotement (7).

3. Appareil doseur selon l'une ou l'autre des revendications 1 ou 2, caractérisé par le fait que deux ou plusieurs orifices de sortie (24) à fermeture individuelle sont prévus, notamment sur une des parois latérales (3, 6).

4. Appareil doseur selon l'une quelconque des revendications 1 à 3, caractérisé par le fait que le récipient (1) est hermétiquement rendu étanche par collage ou soudure, à l'exception de l'ouverture de remplissage et d'aération (12), de l'orifice de trop-plein (22), ainsi que des orifices de sortie (24).

5. Appareil doseur selon l'une quelconque des revendications 1 à 4, caractérisé par le fait que le récipient (1) est fabriqué en matière plastique transparente.

6. Appareil doseur selon l'une quelconque des revendications 1 à 5, caractérisé par le fait que les parois frontales (8, 9) constituent les côtés à angle droit d'un triangle isocèle et/ou rectangle.

7. Appareil doseur selon l'un quelconque des revendications 1 à 6, caractérisé par le fait que l'axe de pivotement (7) de situe à la même distance radiale (R) des deux parois frontales (8, 9) constituant les deux côtés à angle droit d'un triangle isocèle.

8. Appareil doseur selon l'une quelconque des revendications 1 à 7, caractérisé par le fait que le niveau de remplissage (23) du récipient (1) se trouve, approximativement, à une même distance (r) en dessous des orifices de trop-plein (22), aussi bien en position de remplissage qu'en position de dosage.

9. Appareil doseur selon l'une quelconque des revendications 1 à 10, caractérisé par le fait que les orifices de sortie (24) sont disposés en arc de cercle (25) autour de l'axe du segment pivotant (4).

10. Appareil doseur selon l'une quelconque des revendications 1 à 9, caractérisé par le fait que la ventouse (2) de fixation du récipient (1) sur la paroi latérale d'un bac est enclenchée de manière rotative et étanche dans un alésage (5) situé dans une des parois latérales du récipient (3, 6), et que l'axe de rotation de la ventouse (2) est en même temps l'axe de pivotement (7) du récipient.

11. Appareil doseur selon l'une quelconque des revendications 1 à 10, caractérisé par le fait, qu'en utilisation, l'axe de pivotement (7) du récipient (1) doit se trouver à peu près au même niveau que celui (11) de l'eau de rinçage.

12. Procédé pour faire fonctionner l'appareil doseur selon l'une quelconque des revendications 1 à 11, caractérisé par le fait que la première paroi frontale (8) comportant l'ouverture de remplissage et d'aération (12) doit être mise en position horizontale lors du remplissage, et en position verticale lors du dosage, par pivotement du récipient.

Fig. 1

Fig. 2